# EUROPÄISCHE PATENTSCHRIFT

(11) **EP 3 191 721 B1**
(45) Veröffentlichungstag und Bekanntmachung des Hinweises auf die Patenterteilung: **15.08.2018**
(21) Anmeldenummer: 15763215.9
(22) Anmeldetag: 20.08.2015
(51) Int. Cl.: F16B 5/06

(54) **VERFAHREN ZUM HERSTELLEN EINER BAUTEILVERBINDUNG SOWIE BAUTEILVERBINDUNG**
METHOD FOR PRODUCING A COMPONENT CONNECTION AND COMPONENT CONNECTION
PROCÉDÉ POUR RÉALISER UNE LIAISON DE COMPOSANTS ET LIAISON DE COMPOSANTS

(30) Priorität: 08.09.2014 DE 102014217895
(43) Veröffentlichungstag der Anmeldung: 19.07.2017
(73) Patentinhaber: Bayerische Motoren Werke Aktiengesellschaft, 80809 München (DE)
(72) Erfinder: HAMMER, Maik, 84079 Bruckberg (DE); NIEKERK, Johann, 80993 München (DE); PFRANG, Jan Andreas, 80636 München (DE)
(86) Internationale Anmeldenummer: PCT/EP2015/069117
(87) Internationale Veröffentlichungsnummer: WO 2016/037823

(56) Entgegenhaltungen:
- WO-A2-2012/084090
- DE-A1- 3 441 349
- DE-A1-102012 101 913

## Beschreibung

Die vorliegende Erfindung betrifft ein Verfahren zum Herstellen einer Bauteilverbindung gemäß dem Oberbegriff des Patentanspruches 1 sowie eine Bauteilverbinduna gemäß dem Oberbegriff des Patentanspruches 7.
Ein derartiges Verfahren bzw. eine derartige Bauteilverbindung ist aus der DE 10 2010 028 322 A1 sowie aus der WO 2012 084 090 A2 bekannt.
Zum technischen Hintergrund der Erfindung zählen die DE 34 41 349 A1 sowie die DE 102012 101 913 A1.

Aufgabe der Erfindung ist es, ein Verfahren bzw. eine Bauteilverbindung zu schaffen, das bzw. die ein noch weitergehendes Anwendungsspektrum aufweist.
Diese Aufgabe wird durch die Merkmale des Patentanspruches 1 bzw. 7 gelöst. Vorteilhafte Ausgestaltungen und Weiterbildungen der Erfindung sind den Unteransprüchen zu entnehmen.
Ausgangspunkt der Erfindung ist ein Verfahren zum Herstellen einer Bauteilverbindung, bei dem auf ein erstes Bauteil eine Kugel aufgeschweißt wird. Das erste Bauteil und die Kugel können aus einem Metallwerkstoff, wie z.B. Stahl, Aluminium o.ä. bestehen. Prinzipiell können das erste Bauteil und die Kugel aber auch aus einem anderen Material, wie z.B. aus Kunststoff, insbesondere aus einem faserverstärkten Kunststoffmaterial bestehen.

Ferner wird ein zweites Bauteil bereitgestellt, welches ein Durchgangsloch und einen von einer Oberseite des zweiten Bauteils abstehenden, aufgebogenen, sich umlaufend um das Durchgangsloch herum erstreckenden "Kragen" aufweist.

Die beiden Bauteile werden aneinandergefügt, derart, dass die von dem ersten Bauteil abstehende Kugel in das in dem zweiten Bauteil vorgesehene Durchgangsloch hinein ragt oder sogar teilweise durch das Durchgangsloch hindurch ragt. Das zweite Bauteil ist dabei so angeordnet, dass der Kragen von dem ersten Bauteil weg steht.

Der Kern der Erfindung besteht darin, dass im Unterschied zu der eingangs genannten DE 10 2010 028 322 A1 für das erste Bauteil ein "Sandwich-Material" verwendet wird bzw. dass das erste Bauteil aus einem Sandwich-Material besteht, zumindest im Bereich um das Durchgangsloch herum. Das erfindungsgemäße Sandwich-Material weist eine aus einem Kunststoffmaterial bestehende Mittelschicht auf, die sich zwischen einer oberen Metallschicht und einer unteren Metallschicht befindet. Die beiden Metallschichten können unmittelbar aufeinander abgewandte Oberflächen der Mittelschicht aufgebracht sein. Beispielsweise kann vorgesehen sein, dass die aus einem Kunststoffmaterial bestehende Mittelschicht eine Dicke von 0,6 mm und die eine Metallschicht, z.B. die obere Metallschicht, eine Dicke von 0,25 mm und die andere Metallschicht, z.B. die untere Metallschicht, eine Dicke von 0,2 mm aufweist.

Derartige Sandwichbauteile erschließen der Erfindung vielfältige Anwendungsmöglichkeiten z.B. im Fahrzeugkarosseriebau. Mit der Erfindung kann ein "Sandwichbauteil" (z.B. Sandwichkarosseriebauteil) in sehr einfacher Weise mit einem anderen, (Karosserie-)bauteil verbunden werden. Sandwichbauteile, die einseitig oder beidseitig mit einer Metallschicht überzogen sind oder die einseitig oder beidseitig eine Metallschicht aufweisen, kommen z.B. für Anwendungen in Betracht, bei eine hohe EMV-Verträglichkeit wichtig ist, d.h. bei Anwendungen, bei denen es um die Abschirmung elektromagnetischer Strahlung geht.

Es kann vorgesehen sein, dass die Kugel ein gewisses Übermaß in Bezug auf den Kragen aufweist. In diesem Fall kann der Kragen als "Klemmkragen" bezeichnet werden, d.h. der Kragen liegt dann von außen her klemmend an einem Außenumfang der Kugel an.

Nach einer Weiterbildung der Erfindung sind die beiden Bauteile miteinander verklebt, d.h. zwischen die beiden Bauteile kann eine Klebstoffschicht eingebracht sein. Die Klebstoffschicht kann unmittelbar bis an die Kugel heranreichen und etwaige Zwischenräume zwischen dem Kragen und den mit dem ersten Bauteil verschweißten "Fuß der Kugel" vollständig ausfüllen, wodurch sichergestellt ist, dass sich in diesem Bereich keine Feuchtigkeit bzw. Kondenswasser ansammeln kann.

Nach einer Weiterbildung der Erfindung wird die Kugel berührungslos mittels eines Laser-Schweißgeräts auf das erste Bauteil aufgeschweißt. Mittels einer Positionserkennungseinrichtung, z.B. mittels einer Kamera und einer Auswerteelektronik, kann die exakte Position der Kugel, z. B. der Mittelpunkt der Kugel ermittelt bzw. errechnet werden. Die von der Positionserkennungseinrichtung bereitgestellten Positionsdaten können einem das Laser-Schweißgerät führenden und das Laser-Schweißgerät steuernden Roboter zugeführt werden. Es kann vorgesehen sein, dass die Kugel über eine umlaufende Schweißnaht, d.h. über eine rotationssymmetrische Schweißnaht mit dem ersten Bauteil verbunden ist.

Das in dem zweiten Bauteil vorgesehene Durchgangsloch kann z.B. durch Stanzen oder durch Bohren hergestellt werden. Wenn das Durchgangsloch aus dem zweiten Bauteil ausgestanzt wird, kann der Kragen gleichzeitig mit dem Stanzen des Durchgangslochs hergestellt werden. Dies muss aber nicht zwingend der Fall sein. Der Kragen kann prinzipiell auch nach der Herstellung des Durchgangslochs durch Aufbiegen eines Randbereichs des Durchgangslochs hergestellt bzw. erzeugt werden.

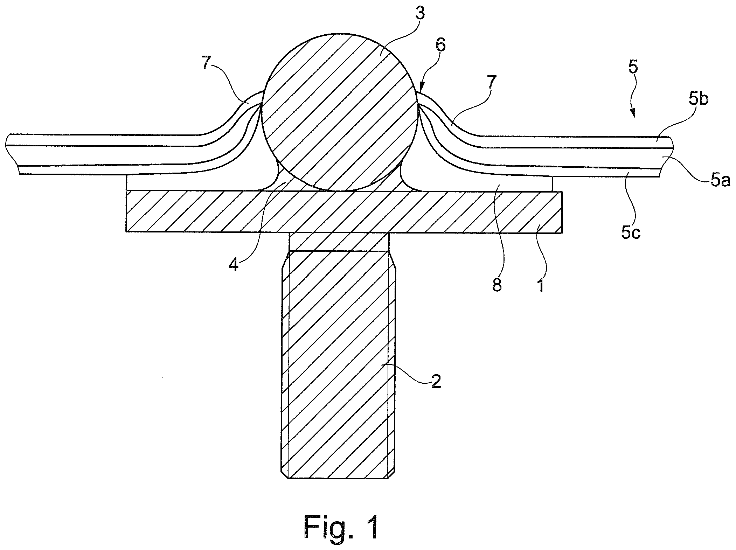

Im Folgenden wird die Erfindung im Zusammenhang mit der Zeichnung näher erläutert. Die einzige Fig. 1 zeigt das Grundprinzip der Erfindung in schematischer Darstellung.

Fig. 1 zeigt eine Bauteilverbindung mit einem ersten Bauteil 1, bei dem es sich bspw. um ein Metallblech oder um eine Metallplatte (z.B. aus Stahl oder Aluminium) handelt, von dem ein Funktionselement 2, das hier ein Gewindebolzen ist, absteht. Eine Stirnseite des Gewindebolzens 2 kann mit dem ersten Bauteil 1 verschweißt sein.

Auf eine dem Funktionselement 2 abgewandte Oberseite des ersten Bauteils 1 ist eine Kugel 3 aufgeschweißt. Die Kugel 3 ist über eine umlaufende, rotationssymmetrische Schweißnaht 4 mit dem ersten Bauteil 1 stoffschlüssig verbunden. Die Schweißnaht 4 kann robotergesteuert, berührungslos mittels einer Laser-Schweißvorrichtung erzeugt werden.

Auf die von dem ersten Bauteil 1 abstehende Kugel 3 ist ein zweites Bauteil 5 aufgesteckt bzw. aufgeclipst. Bei dem zweiten Bauteil 5 handelt es sich um ein "Sandwich-Bauteil" bzw. ein aus einem "Sandwich-Material" bestehendes Bauteil. Das Bauteil 5 weist eine Mittelschicht 5a auf, die aus einem Kunststoffmaterial, z.B. einem faserverstärkten Kunststoffmaterial, bestehen kann. Auf eine Oberseite der Mittelschicht ist eine obere Schicht 5b, bei der es sich bspw. um eine Metallschicht handeln kann, aufgebracht. Auf einer Unterseite der Mittelschicht 5a ist eine untere Schicht 5c, bei der es sich ebenfalls um eine Metallschicht handeln kann, aufgebracht. Die Metallschichten können z.B. aus Aluminium bestehen oder Aluminium enthalten.

Vor dem Aufstecken bzw. Aufclipsen des zweiten Bauteils 5 auf die Kugel 3 wird in dem zweiten Bauteil 5 ein Durchgangsloch hergestellt, z.B. durch Bohren oder durch Stanzen. Gleichzeitig mit dem Herstellen des Durchgangslochs oder anschließend, d.h. nach dem Herstellen des Durchgangslochs, wird ein Randbereich des Durchgangslochs 6 zu einem umlaufenden Kragen 7 nach oben aufgebogen. Wie aus Fig. 1 ersichtlich ist, ist das zweite Bauteil 5 so angeordnet, dass der Kragen 7 von dem ersten Bauteil 1 weg steht.

Bei dem in Fig. 1 gezeigten Ausführungsbeispiel ist das durch den Kragen 7 definierte Durchgangsloch 6 etwas größer als der Durchmesser der Kugel 3.

Alternativ dazu kann vorgesehen sein, dass die Kugel 3 ein Übermaß in Bezug auf das Durchgangsloch 6 aufweist, so dass beim Aufclipsen bzw. Aufstecken des zweiten Bauteils 5 auf die Kugel 3 eine Klemmverbindung zwischen der Kugel 3 und dem Durchgangsloch 6 bzw. dem inneren Rand ("Kragen") des Durchgangslochs 6 entsteht. In diesem Fall liegt der umlaufende Kragen 7 klemmend an einem Außenumfang der Kugel 3 an.

Wie aus Fig. 1 ersichtlich ist, ist zwischen das erste Bauteil 1 und das zweite Bauteil 5 eine Klebstoffschicht 8 eingebracht. Die Klebstoffschicht 8 füllt den zwischen dem Kragen 7 und dem ersten Bauteil 1 bestehenden Zwischenraum vollständig aus, wodurch verhindert wird, dass sich in diesem Bereich Feuchtigkeit oder Kondenswasser ansammeln kann.

Die Erfindung ist z.B. für einen Einsatz im Fahrzeugkarosseriebau geeignet. Bei dem zweiten Bauteil 5 kann es sich bspw. um ein Karosseriebauteil, insbesondere um ein aus Kunststoff und Metall bestehendes Karosseriebauteil handeln. Über die Kugel 3 und den Klemmkragen 7 kann in einfacher Weise ein Funktionselement 2 mit dem Bauteil 5 verbunden werden.

## Patentansprüche

1. Verfahren zum Herstellen einer Bauteilverbindung, mit folgenden Schritten:
- Bereitstellen eines ersten Bauteils (1),
- Aufschweißen einer Kugel (3) auf das erste Bauteil (1),
- Bereitstellen eines zweiten Bauteils (5), welches ein Durchgangsloch (6) und einen von einer Oberseite des zweiten Bauteils (5) abstehenden, aufgebogenen, sich umlaufend um das Durchgangsloch (6) herum erstreckenden Kragen (7) aufweist,
- Aneinanderfügen der beiden Bauteile (1, 5), derart, dass die von dem ersten Bauteil (1) abstehende Kugel (3) in das in dem zweiten Bauteil (5) vorgesehene Durchgangsloch (6) hinein oder sogar teilweise durch das Durchgangsloch (6) hindurch ragt, wobei das zweite Bauteil (5) so angeordnet ist, dass der Kragen (7) von dem ersten Bauteil (1) weg steht,
**dadurch gekennzeichnet, dass** für das zweite Bauteil (5) ein Sandwich-Material verwendet wird, das eine aus einem Kunststoffmaterial bestehende Mittelschicht (5a) aufweist, die sich zwischen einer oberen Metallschicht (5b) und einer unteren Metallschicht (5c) befindet.

2. Verfahren nach Anspruch 1, **dadurch gekennzeichnet, dass** die beiden Bauteile (1, 5) über eine Klebstoffschicht (8) miteinander verbunden werden.

3. Verfahren nach Anspruch 1 oder 2, **dadurch gekennzeichnet, dass** die Kugel (3) berührungslos mittels eines Laser-Schweißgeräts auf das erste Bauteil (1) aufgeschweißt wird.

4. Verfahren nach einem der Ansprüche 1 bis 3, **dadurch gekennzeichnet, dass** das Durchgangsloch (6) durch Stanzen oder Bohren hergestellt wird.

5. Verfahren nach einem der Ansprüche 1 bis 4, **dadurch gekennzeichnet, dass** der Kragen (7) nach dem Herstellen des Durchgangslochs (6) durch Aufbiegen eines Randbereichs des Durchgangslochs (6) hergestellt wird.

6. Verfahren nach Anspruch 4, **dadurch gekennzeichnet, dass** der Kragen (7) gleichzeitig mit dem Stanzen des Durchgangslochs (6) hergestellt wird.

7. Bauteilverbindung, mit
- einem ersten Bauteil (1), das aus einem Metallwerkstoff besteht,
- einer ebenfalls aus einem Metallwerkstoff bestehenden Kugel (3), die auf das erste Bauteil (1) aufgeschweißt ist,
- einem zweiten Bauteil, welches ein Durchgangsloch (6) und einen von einer Oberseite des zweiten Bauteils (5) abstehenden, aufgebogenen, sich umlaufend um das Durchgangsloch (6) herum erstreckenden Kragen (7) aufweist, wobei
die beiden Bauteile (1, 5) derart aneinander gefügt sind, dass die von dem ersten Bauteil (1) abstehende Kugel (3) in das in dem zweiten Bauteil (5) vorgesehene Durchgangsloch (6) hinein ragt oder teilweise sogar durch das Durchgangsloch (6) hindurch ragt, wobei das zweite Bauteil (5) so angeordnet ist, dass der Kragen (7) von dem ersten Bauteil (1) weg steht,
**dadurch gekennzeichnet, dass** das zweite Bauteil (5) ein Sandwich-Bauteil ist, das eine aus einem Kunststoffmaterial bestehende Mittelschicht (5a) aufweist, die sich zwischen einer oberen Metallschicht (5b) und einer unteren Metallschicht (5c) befindet.

8. Bauteilverbindung nach Anspruch 7, **dadurch gekennzeichnet, dass** die beiden Bauteile (1, 5) miteinander verklebt sind.

9. Bauteilverbindung nach einem der Ansprüche 7 oder 8, **dadurch gekennzeichnet, dass** der Kragen (7) ein Klemmkragen ist, der von außen her klemmend an einem Außenumfang der Kugel (3) anliegt.

## Claims

1. A method for producing a component connection, having the following steps:
- providing a first component (1),
- welding a sphere (3) onto the first component (1),
- providing a second component (5) which has a through-hole (6) and a bent-up collar (7) which projects from an upper side of the second component (5) and extends circumferentially around the through-hole (6),
- joining together the two components (1, 5) such that the sphere (3) which projects from the first component (1) protrudes into the through-hole (6) provided in the second component (5) or even partially protrudes through the through-hole (6), wherein the second component(5) is arranged such that the collar(7) projects away from the first component (1),
**characterised in that** a sandwich material is used for the second component (5), which material has a middle layer (5a) comprising a plastics material which is located between an upper metal layer (5b) and a lower metal layer (5c).

2. A method according to Claim 1, **characterised in that** the two components (1, 5) are joined together by means of an adhesive layer (8).

3. A method according to Claim 1 or Claim 2, **characterised in that** the sphere (3) is welded onto the first component (1) in contactless manner by means of a laser welding apparatus.

4. A method according to one of Claims 1 to 3, **characterised in that** the through-hole (6) is produced by punching or drilling.

5. A method according to one of Claims 1 to 4, **characterised in that**, once the through-hole (6) has been produced, the collar (7) is produced by bending up an edge region of the through-hole (6).

6. A method according to Claim 4, **characterised in that** the collar (7) is produced simultaneously with the punching of the through-hole (6).

7. A component connection, with
- a first component (1) which comprises a metal material,
- a sphere (3) likewise comprising a metal material, which is welded onto the first component (1),
- a second component (5) which has a through-hole (6) and a bent-up collar (7) which projects from an upper side of the second component and extends circumferentially around the through-hole (6), wherein
the two components (1, 5) are joined together such that the sphere (3) which projects from the first component (1) protrudes into the through-hole (6) provided in the second component (5) or partially even protrudes through the through-hole (6), wherein the second component (5) is arranged such that the collar (7) projects away from the first component (1), **characterised in that** the second component (5) is a sandwich component which has a middle layer (5a) comprising a plastics material which is located between an upper metal layer (5b) and a lower metal layer (5c).

8. A component connection according to Claim 7, **characterised in that** the two components (1, 5) are glued together.

9. A component connection according to one of Claims 7 or 8, **characterised in that** the collar(7) is a clamping collarwhich lies in clamping mannerfrom the outside on an outer periphery of the sphere (3).

## Revendications

1. Procédé d'obtention d'une liaison de pièces comprenant des étapes consistant à :
- se procurer une première pièce (1),
- souder une sphère (3) sur la première pièce (1),
- se procurer une seconde pièce (5) qui comporte un perçage traversant (6) et une collerette cintrée (7) dépassant de la face supérieure de la seconde pièce (5), et s'étendant autour du perçage traversant (6),
- assembler les deux pièces (1, 5) de sorte que la sphère (3) dépassant de la première pièce (1) pénètre dans le perçage traversant (6) de la seconde pièce (5), ou partiellement au travers de ce perçage traversant (6), la seconde pièce (5) étant positionnée de sorte que la collerette (7) s'écarte de la première pièce (1),
**caractérisée en ce que**
pour la seconde pièce (5), on utilise un matériau en sandwich qui comporte une couche médiane (5a) en un matériau synthétique située entre une couche métallique supérieure (5b) et une couche métallique inférieure (5c).

2. Procédé conforme à la revendication 1,
**caractérisé en ce que**
les deux pièces (1, 5) sont reliées par une couche de colle (8).

3. Procédé conforme à la revendication 1 ou 2,
**caractérisé en ce que**
la sphère (3) est soudée sans contact sur la première pièce (1) au moyen d'un appareil de soudage laser.

4. Procédé conforme à l'une des revendications 1 à 3,
**caractérisé en ce que**
le perçage traversant (6) est obtenu par poinçonnage ou par perçage.

5. Procédé conforme à l'une des revendications 1 à 4,
**caractérisé en ce que**
la collerette (7) est réalisée après la réalisation du perçage traversant (6) par cintrage de la zone de bord de ce perçage traversant (6).

6. Procédé conforme à la revendication 4,
**caractérisé en ce que**
la collerette (7) est réalisée simultanément au poinçonnage du perçage traversant (6).

7. Assemblage de pièces comprenant :
- une première pièce (1) réalisée en un métal,
- une sphère (3) également réalisée en un métal qui est soudée sur la première pièce (1),
- une seconde pièce qui comporte un perçage traversant (6) et une collerette cintrée (7) s'écartant de la face supérieure de la seconde pièce (5), et s'étendant autour du perçage traversant (6), dans lequel :
les deux pièces (1, 5) sont assemblées de sorte que la sphère (3) qui s'écarte de la première pièce (1) pénètre dans le perçage traversant (6) prévu dans la seconde pièce (5), ou partiellement au travers de ce perçage traversant (6), la seconde pièce (5) étant positionnée de sorte que la collerette (7) s'écarte de la première pièce (1),
**caractérisé en ce que**
la première pièce (5) est une pièce en sandwich qui comporte une couche médiane (5a) réalisée en un matériau synthétique qui est positionné entre une couche métallique supérieure (5b) et une couche métallique inférieure (5c).

8. Assemblage de pièces conforme à la revendication 7,
**caractérisé en ce que**
les deux pièces (1, 5) sont collées l'une à l'autre.

9. Assemblage de pièces conforme à l'une des revendications 7 et 8,
**caractérisé en ce que**
la collerette (7) est une collerette de serrage qui s'applique par l'extérieur en la serrant sur la périphérie externe de la sphère (3).
